# EUROPÄISCHE PATENTANMELDUNG

(11) **EP 0 993 099 A1**
(43) Veröffentlichungstag der Anmeldung: **12.04.2000**
(21) Anmeldenummer: 99118995.2
(22) Anmeldetag: 27.09.1999
(51) Int. Cl.: H02K 11/00

(54) **Ständerwicklungstemperaturüberwachungseinrichtung**

(30) Priorität: 09.10.1998 DE 19846629
(71) Anmelder: SIEMENS AKTIENGESELLSCHAFT, 80333 München (DE)
(72) Erfinder: Gerber, Ernst, 90522 Oberasbach (DE); Pittius, Ekkehard, Dr., 91154 Roth (DE)

(57) **Zusammenfassung**

Zur Überwachung der Wicklungstemperatur der elektrischen Maschine ist wenigstens eine an der Wicklung (1, 5) in wärmeleitender Verbindung angebrachte Aufnahme (2) vorgesehen, in die ein Temperatursensor (3) auswechselbar einsetzbar ist.

## Beschreibung

Die Erfindung betrifft eine Ständerwicklung für eine elektrische Maschine mit einer Einrichtung zur Überwachung der Wicklungstemperatur.

Bei mit hoher Leistung betriebenen elektrischen Maschinen, insbesondere Bahnmotoren, bei denen die Wicklungstemperatur überwacht werden soll, kommen Nutthermometer wegen des Platzbedarfes nicht in Betracht. Zur Temperaturüberwachung werden deshalb häufig Temperatursensoren im Wickelkopf untergebracht, aus Redundanzgründen oft mehrere. Diese werden während der Fertigung zusammen mit der Wicklung imprägniert. Fallen diese empfindlichen Sensoren dann während des Betriebes der elektrischen Maschine aus, ist der Austausch der Temperatursensoren mit einer Demontage der Maschine verbunden und damit sehr aufwendig.

Aufgabe der Erfindung ist es, bei elektrischen Maschinen eine verbesserte Einrichtung zur Überwachung der Wicklungstemperatur zu schaffen.

Gemäß der Erfindung wird dies erreicht durch wenigstens eine an der Wicklung in wärmeleitender Verbindung angebrachte Aufnahme, in die ein Temperatursensor auswechselbar einsetzbar ist. Danach kann bei einem Ausfall eines Temperatursensors dieses Teil ohne Demontage der Maschine bei geringem Montageaufwand ausgewechselt werden.

Nach vorteilhafter Ausgestaltung der Erfindung ist wenigstens eine rohr- oder topfförmige Aufnahme aus elektrisch isolierendem Material vorgesehen. Dabei wird die Aufnahme in großflächiger, gut wärmeleitender Verbindung an der Wicklung befestigt, wobei es wegen des Zuganges von Vorteil ist, wenn die Aufnahme für den Sensor im Bereich der das Blechpaket überragenden Enden der Wicklung oder der Wicklungsköpfe befestigt wird.

Ein erfindungsgemäßes Verfahren zum Anbringen der Einrichtung zur Überwachung der Wicklungstemperatur an der Ständerwicklung einer elektrischen Maschine ist dadurch gekennzeichnet, daß beim Anbringen der Ständerwicklung am Ständer der elektrischen Maschine an der das Blechpaket überragenden Wicklung wenigstens eine Aufnahme befestigt wird, daß die Aufnahme in wärmeleitender Verbindung zur Wicklung angebracht wird, daß die Aufnahme beim Imprägnieren der Wicklung durch einen entfernbaren Einsatz verschlossen wird und daß vor der Auslieferung der Maschine der Einsatz entfernt und ein Temperatursensor in die Aufnahme eingesetzt wird, der Teil eines am Ständer befestigbaren Temperaturfühlers ist. Beispielsweise wird bei der Fertigung der Maschine eine rohrförmige Aufnahme an eine geeignete Stelle am Wickelkopf gebunden. Zur guten thermischen Anbindung soll das Aufnahmerohr mit einer möglichst großen Fläche an die Wicklung gebunden sein. In die Aufnahme wird während des Imprägnierens ein Dummy-Temperaturfühler gesteckt, um das Eindringen von Gießharz zu verhindern. Vor der Auslieferung der Maschine wird dann der Dummy durch einen richtigen Temperaturfühler ersetzt, der z.B. außen am Maschinengehäuse festschraubbar ist. Beim Einsetzen des Sensors wird Wärmeleitpaste verwendet, um eine möglichst gute thermische Anbindung an die Wicklung zu erhalten.

Weitere vorteilhafte Ausgestaltungen der Erfindung ergeben sich aus den Ansprüchen und aus der nachfolgenden Beschreibung der in der Zeichnung dargestellten Ausführungsbeispiele.

Es zeigen:

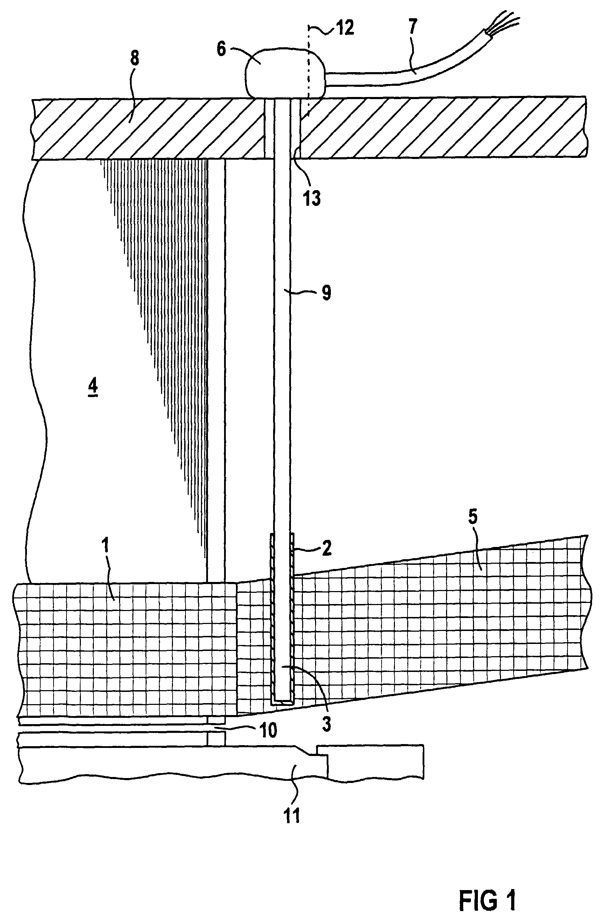

Figur 1 eine Teilansicht einer elektrischen Maschine, beispielsweise einer Induktionsmaschine, deren Statorwicklung zur Überwachung der Wicklungstemperatur eine Aufnahme für einen Temperatursensor aufweist,
Figur 2 eine Teilansicht eines Statorblechpaketes mit einer Wicklung und einer an einem Spulenschenkel befestigten Aufnahme mit Temperatursensor.

Die in einem Ausschnitt gezeichnete elektrische Maschine besteht aus einem Ständergehäuse 8, einem Ständerblechpaket 4, einer Ständerwicklung 1 sowie aus einem Läufer 11, der durch einen Luftspalt 10 vom Ständer getrennt ist. Zur Überwachung der Wicklungstemperatur ist an wenigstens einem zum Wickelkopf aus dem Blechpaket 4 vorstehenden Spulenschenkel 5 der Ständerwicklung eine Aufnahme 2 angebracht, die in gut wärmeleitendem Kontakt an der Wicklung befestigt ist und in welche ein Temperatursensor 3 auswechselbar einsetzbar ist. Die beispielsweise rohr- oder topfförmige Aufnahme 2 besteht aus wärmeleitendem und wärmebeständigem, jedoch elektrisch isolierendem Material. Beim Einsetzen des Sensors 3 in die Aufnahme 2 wird zweckmäßig eine Wärmeleitpaste verwendet. Beim Ausführungsbeispiel wird ein Temperaturfühler 6 mittels einer Schraubverbindung 12 lösbar am Ständergehäuse 8 befestigt. Der Temperaturfühler 6 umfaßt eine elektrische Anschlußleitung 7 und einen Temperaturfühlerstab 9 zum Sensor 3, wobei der Stab 9 durch eine Bohrung 13 des Maschinengehäuses 8 steckbar und mit dem Sensor 3 in die Aufnahme 2 einsetzbar ist. Vorteilhaft dabei ist die gute thermische Anbindung an die Wicklung, die einfache Montage des Temperaturfühlers sowie dessen einfache Austauschbarkeit. Dabei kann die Aufnahme 2 - wie gezeichnet - als kurzes, eventuell endseitig verschlossenes Rohr ausgeführt oder bis an das Ständergehäuse 8 hochgezogen sein.

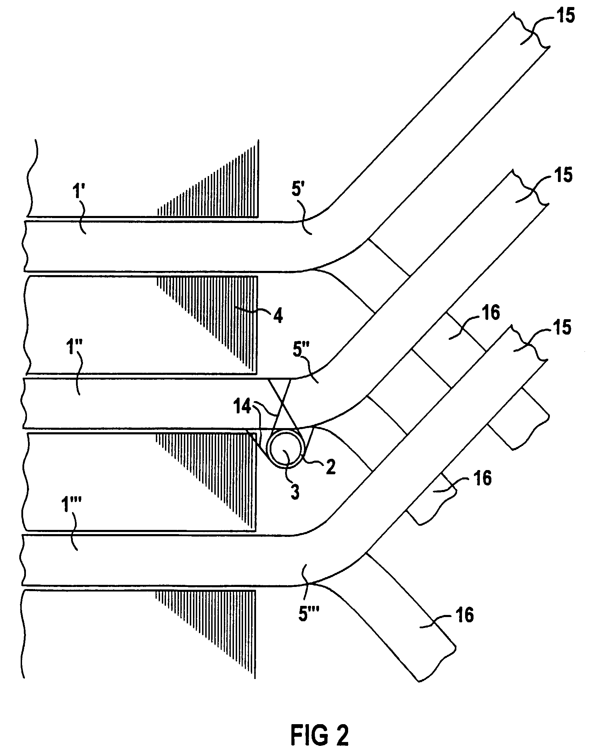

Gemäß der Ausführung nach Figur 2 ist das Blechpaket 4 einer elektrischen Maschine, insbesondere eines Bahnmotors, von Spulenschenkeln 1', 1'', 1''' durchsetzt, deren das Blechpaket überragende Enden 5', 5'', 5''' tangential abgekröpfte Unter- bzw. Oberlagen 15, 16 einer Zweischichtwicklungsform bilden. In gut zugängiger Anordnung ist beispielsweise an dem überragenden Spulenschenkelende 5'' der Wicklung eine rohrförmige Aufnahme 2 befestigt. Befestigungsmittel zum Anbinden der Aufnahme 2 an die Wicklung 5'' sind mit 14 bezeichnet. In die an der Wicklung befestigte Aufnahme 2 wird während des Imprägnierens ein nicht gezeichneter Dummy-Temperaturfühler gesteckt, um das Eindringen von Gießharz in die Aufnahme 2 zu verhindern. Ist die elektrische Maschine bzw. deren Ständer fertig montiert, so kann oder können die empfindlichen Temperaturfühler mit den Sensoren in die mit der Wicklung verbundenen Aufnahmen gesteckt werden.

## Patentansprüche

1. Ständerwicklung für eine elektrische Maschine mit einer Einrichtung zur Überwachung der Wicklungstemperatur, **gekennzeichnet durch** wenigstens eine an der Wicklung (1, 5) in wärmeleitender Verbindung angebrachte Aufnahme (2), in die ein Temperatursensor (3) auswechselbar einsetzbar ist.

2. Ständerwicklung nach Anspruch 1, **dadurch gekennzeichnet**, daß wenigstens eine rohr- oder topfförmige Aufnahme (2) aus elektrisch isolierendem Material vorgesehen ist.

3. Ständerwicklung nach Anspruch 1 und 2, **dadurch gekennzeichnet,** daß die Aufnahme (2) in großflächiger, wärmeleitender Verbindung an der Wicklung, insbesondere im Bereich der das Blechpaket (4) überragenden Enden der Wicklung oder der Wicklungsköpfe (5), befestigt ist.

4. Ständerwicklung nach einem der Ansprüche 1 bis 3, **dadurch gekennzeichnet**, daß die Aufnahme (2) verschließbar und nach dem Imprägnieren der Wicklung (1, 5) in die geöffnete Aufnahme der Sensor (3) einsetzbar ist.

5. Ständerwicklung nach Anspruch 4, **dadurch ge kennzeichnet**, daß zum Verschließen der Aufnahme ein dem Sensor nachgebildeter Dummy vorgesehen ist.

6. Ständerwicklung nach einem der Ansprüche 1 bis 5, **dadurch gekennzeichnet**, daß ein Temperaturfühler (6) mit seinem elektrischen Anschluß (7) auf dem Ständergehäuse (8) einer elektrischen Maschine angeordnet ist und an einem Temperaturfühlerstab (9) den Temperatursensor (3) trägt, der in die an der Wicklung (1, 5) befestigte Aufnahme (2) eingesetzt ist.

7. Ständerwicklung nach einem oder mehreren der Ansprüche 1 bis 6, **dadurch gekennzeichnet,** daß beim Einsetzen des Sensors (3) in die Aufnahme (2) eine Wärmeleitpaste od.dgl. verwendet wird.

8. Verfahren zum Anbringen der Einrichtung zur Überwachung der Wicklungstemperatur an der Ständerwicklung einer elektrischen Maschine nach einem oder mehreren der Ansprüche 1 bis 7, **dadurch gekennzeichnet**,
- daß beim Anbringen der Ständerwicklung (1) am Ständer (8) der elektrischen Maschine an der das Blechpaket (4) überragenden Wicklung (5) wenigstens eine Aufnahme (2) befestigt wird,
- daß die Aufnahme (2) in wärmeleitender Verbindung zur Wicklung (5) angebracht wird,
- daß die Aufnahme (2) beim Imprägnieren der Wicklung (1, 5) durch einen entfernbaren Einsatz verschlossen wird,
- daß vor der Auslieferung der Maschine der Einsatz entfernt und ein Temperatursensor (3) in die Aufnahme (2) eingesetzt wird, der Teil eines am Ständer (8) befestigbaren Temperaturfühlers (6) ist.
